# EUROPEAN PATENT APPLICATION

(11) **EP 0 825 555 A1**
(43) Date of publication of application: **25.02.1998**
(21) Application number: 97202557.1
(22) Date of filing: 20.08.1997
(51) Int. Cl.: G06K 19/077

(54) **Method and apparatus for the production of a smart card**

(30) Priority: 20.08.1996 NL 1003838
(71) Applicant: GPT Axxicon B.V., NL-5706 LD Helmond (NL)
(72) Inventor: Eshuis, Donald, 5581 EP Waalre (NL)
(74) Representative: de Bruijn, Leendert C.

(57) **Abstract**

Smart card and method for the production thereof. In order to incorporate the chip in the smart card in a simple manner and to produce the smart card in a simple manner it is proposed to employ the so-called in-mould labelling technique. With this technique at least one label is placed in an injection mould and the plastic is then injected. By mounting a chip on that side of the label which faces away from the plastic to be introduced and providing the chip with fixing means which extend through the label, the chip is anchored to the plastic to be injected.

## Description

The present invention relates to a method for incorporating a semiconductor substrate in a card-shaped article, in order to form a smart card, comprising the provision of at least one label forming one outside of the subsequent smart card, positioning said label in a mould cavity of an injection moulding apparatus and filling said cavity with plastic material, followed by removal of the assembly thus formed.

Various methods for incorporating chips in smart cards have been proposed in the prior art. The present invention relates in particular to those smart cards with which contact can be made with the chip on the outside. That is to say, the invention relates in particular, but not exclusively, to constructions wherein electrical contact between the various components of the chip and the environment is of importance. However, it must be understood that constructions with a magnetic strip and aerials also fall under the invention. Smart cards of this type can vary from the most simple to the most sophisticated embodiments, the so-called super smart cards, that is to say cards with a keyboard and display, currently being the most sophisticated design.

More particularly, the invention relates to the field of the production of smart cards wherein the cards are at least partially produced by injection moulding. A method of this type is, for example, so-called in-mould labelling. With this method a label is provided with the requisite printing and other components of importance and is placed in the mould cavity of an injection mould and plastic is injected against the label. The plastic forms the support for the smart card to be formed. In the prior art it is proposed to use so-called stamp techniques during injection to make a cavity in the semi-finished product thus formed. The chip can subsequently be glued into the cavity. A method of this type is disclosed in European Application 0 340 099. A method of this type requires a particularly complicated mechanism for making the cavity. After all, because of the small thickness of the smart card it is not possible simply to construct a mould which has a smaller thickness in a particular location. It has been found that this results in inadequate flow of plastic over the impression. In WO-92/20506 it is proposed first to inject the space below the impression at least partially full and, while injection moulding is being continued, to produce the impression with the aid of separate stamps.

This has been one of the reasons why injection moulding of smart cards has to date not been used on a large scale and preference is given to laminated constructions.

The aim of the invention is to overcome this disadvantage and to provide a method with which it is possible to join a chip to a card during injection moulding, without additional operations.

This aim is achieved with a method as described above in that the semiconductor substrate is mounted on that side of the label which is in contact with the movable plate of the mould. By placing the semiconductor substrate on the movable plate side and not on the side where the latter is covered by injected plastic, as is also shown in EP-A 0 340 099, the substrate is better protected against the elevated temperature which prevails during injection whilst, moreover, the chip is actually on the surface of the card, so that no further measures are needed to bring this into contact with the surroundings. In particular, it is not necessary to make further constructions in the card to which the wiring of the chip has to be fixed.

It is pointed out that German Offenlegungsschrift 4 440 721 discloses a method wherein the two card mouldings are first produced, at least one of which is provided with a seat for a chip.

The two card mouldings are then pressed against one another outside an injection mould at a chip is received at both sides of the card, one of the mouldings being provided with insertion openings which interact with pin-like projections on the other card section. After pressing onto one another, the pin-like projections are mechanically deformed, as a result of which the two card mouldings are firmly joined to one another. Any residual gap in the vicinity of the seat for the chip is filled with a potting resin. With this method there is no question of placing a chip in a mould and covering it with injected plastic.

According to an advantageous embodiment of the invention, at least one semiconductor substrate is fixed to the label before the label is introduced into the mould cavity and placed together with the label into the mould cavity.

This embodiment is based on the insight of avoiding the step of subsequent mounting of the chip, that is to say gluing the chip into the cavity formed, after injection moulding and removal of the semifinished product from the mould, as a result of which production costs can be lowered.

In order to expose the semiconductor substrate as little as possible to heating and other adverse conditions which are caused by the plastic flowing over the substrate, it is proposed to mount the substrate on that side of the label which faces away from that part of the mould cavity which is to be filled by injection. With an embodiment of this type, in the final product the top of the chip will be flush with the top surface of the label. This flush lie can be achieved during injection moulding, the pressure of the plastic on the label causing the label to fit tightly round the chip. Should such contact pressure against the semiconductor substrate prove inadequate, it is possible, in a separate step before introduction into the mould cavity, to make an impression in the label for accommodating at least part of the semiconductor substrate.

It is also possible to provide the other side of the smart card with a label. In a very particular case, this label also can be provided with a semiconductor substrate.

The invention also relates to a smart card which is provided with the abovementioned construction. With an embodiment of this type the semiconductor substrate is provided with fixing means. These fixing means can be produced as an integral part when injecting around the actual semiconductor, but can also be fixed to the housing in a subsequent step, for example by gluing.

The fixing means described above can comprise any structures known in the prior art which can be fitted simply through an opening in the label and, on the other hand, provide an adequate join to the plastic to prevent the chip becoming detached from the card.

According to one embodiment, such fixing means comprise a pin. However, it is also possible to construct the fixing means in a swallowtail shape, whilst a combination of the two characteristics must not be precluded. A pin construction of this type can be mounted on separate fixing means, but, for example, can also be produced by bending out part of the lead frame.

The invention will be explained in more detail below with reference to an illustrative embodiment shown in the drawing. In the drawing:
Fig. 1 shows, in cross-section, a semiconductor substrate to be used in a smart card;
Fig. 2 shows part of the smart card during the production thereof;
Fig. 3 shows the smart card during a further stage of the production;
Fig. 4 shows the smart card after injection of the plastic;
Fig. 5 shows a perspective view of the smart card according to the invention and
Fig. 6 shows a detail of a further embodiment of a semiconductor substrate to be mounted in the smart card according to the invention.

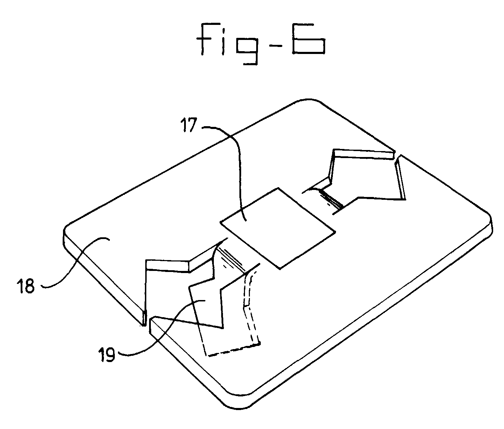

Fig. 5 shows a smart card which is indicated in its entirety by 1. The smart card consists of a support in which a semiconductor substrate module or chip 2 has been mounted. In the chip 2 is provided with contacts 3. However, it must be understood that the invention is also applicable to smart cards which operate without contact by, for example, aerials or magnetic strips.

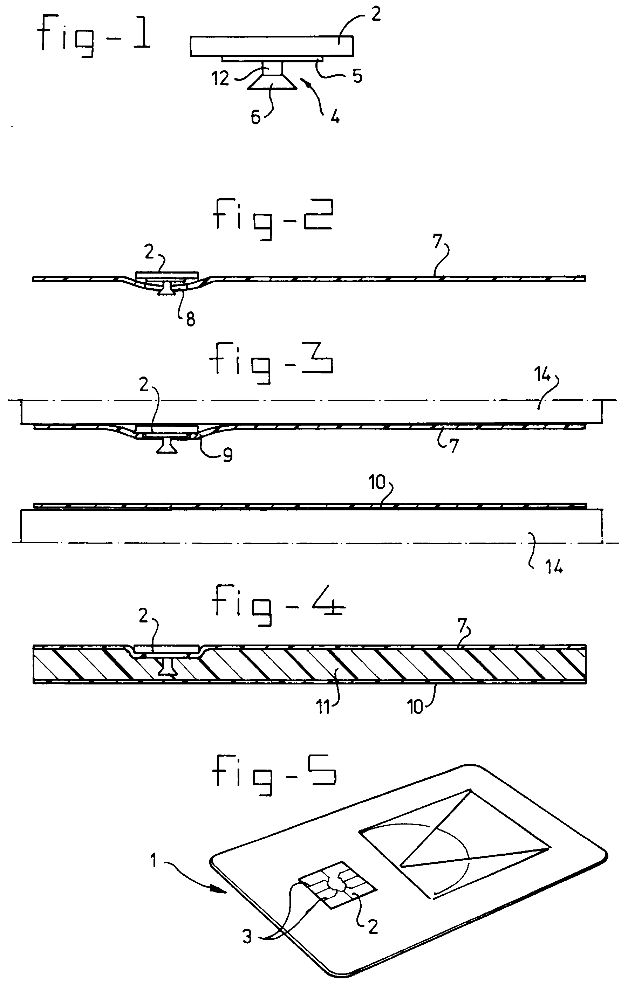

The semiconductor substrate 2 or chip is shown in more detail in Fig. 1. The semiconductor, including housing, is indicated by 2. Fixing means 4 are mounted against the underside thereof by gluing. The fixing means consist of a plate section 5 which is directly joined to semiconductor substrate 2. A pin 12, which is provided with a swallowtail-shaped part 6 at the end thereof adjoins said plate section 5.

The smart card described above is produced by providing a label 7 (Fig. 2). The latter can be produced by any method known from the prior art. An opening 8 is made in the label and the swallowtail-shaped part 6 of the chip is moved through the opening. Subsequently, in a step which is optional, depending on the material characteristics of both the label and the chip, an impression is made in the label to make the top of the semiconductor substrate flush with the top of the label. This is shown in Fig. 3. It can also be seen from this figure that a further label 10 is provided which is arranged some distance away from label 7. The position shown here exists on introduction into a mould. The two plates of the mould are indicated diagrammatically by 14. In a manner which is not shown in more detail, plastic is now injected between the labels 7 and 10 positioned in the mould in this way and said plastic is indicated by 11 in Fig. 4. The smart card shown in Fig. 5 is produced as a result. The mould optionally contains means for accurately fixing the position of the semiconductor substrate.

With the structure according to the invention it is no longer necessary after production of a semifinished product to glue the chip into a cavity made for this purpose. Furthermore, it is always ensured that the chip is flush with the outer surface of label 7. Consequently it is not necessary, as is the case with known gluing techniques, to provide a certain thickness for the layer of adhesive or double-sided adhesive tape, as a result of which the thickness of the plastic material 11 present between the labels can be greater and the problems experienced in the prior art when shaping a recess are not found or are found to a lesser extent because the recess is of smaller size.

With the construction described above it is ensured, in a particularly simple manner, that the chip is positioned in the correct position with respect to the card. The advantage of in-mould labelling is the simple provision of information on a component produced by injection moulding. Moreover, the problems which arise because it is particularly difficult to fix chip components such as semiconductor substrates on a label are avoided. After all, the labels are often provided with a finishing coat on which gluing is particularly difficult. Although the fixing of the chip to the label has been described above with reference to a preferred embodiment, it must be understood that numerous variants are possible. The only essential feature of the method is that the semiconductor substrate is placed with the label in the mould, the semiconductor substrate facing towards the relevant mould plate.

An example of a further possibility for fixing semiconductor substrates to the card is shown in Fig. 6. In this figure only part of the semiconductor substrate is shown. This part consists of the actual semiconductor 17 which is arranged on a so-called lead frame 18. By means of punching, bending or cutting the lead frame 18 is provided with pointed parts 19 at the ends, which pointed parts are bent downwards.

With an embodiment of this type it is not necessary to make an opening in the label. The parts 19 are so sharp that these penetrate through the label by themselves and optionally provide adhesion with the plastic injected around them.

In applications where no contact between the chip and the surroundings is necessary it is obviously possible to mount the chip on the other side, that is to say on the plastic side of the label. For removal from the mould of the product all methods known in the art can be used. E.g. 'gate cutting' can be used, wherein the runner is separated from the product directly near the connection to the product in the mould. This and other variants are obvious, to those skilled in the art, after reading the above description and fall within the scope of the present application as defined in the appended claims.

## Claims

1. Method for incorporating at least one semiconductor substrate in a card-shaped article, in order to form a smart card, comprising the provision of at least one label forming one outer side of the subsequent smart card, positioning said label and the semiconductor substrate in a mould cavity of an injection moulding apparatus and filling said cavity with plastic material, followed by removal of the assembly thus formed, characterised in that the semiconductor substrate is mounted on that side of the label which is in contact with the movable plate of the mould.

2. Method according to Claim 1, wherein the semiconductor substrate is fixed to the label before the label is introduced into the mould cavity and is placed together with the label into the mould cavity.

3. Method according to Claim 1 or 2, wherein the semiconductor substrate is mounted on that side of the label which faces away from that part of the mould cavity which is to be filled by injection.

4. Method according to one of the preceding claims, wherein the label is provided with an impression at the location where the semiconductor substrate is introduced.

5. Method according to one of the preceding claims, wherein two labels located some distance apart are arranged in the mould cavity of the mould and plastic is injected between them.

6. Smart card comprising a layered construction, consisting of at least one label bearing information (7) and a plastic support (11), a recess being provided in the label bearing information to receive a semiconductor substrate (2), characterised in that the semiconductor substrate (2) is provided with fixing means which extend at least partially through the label (7) and, respectively, the plastic support (11).

7. Smart card according to Claim 6, wherein said fixing means comprise a pin (12).

8. Smart card according to Claim 6 or 7, wherein said fixing means comprise a portion which extends into the plastic support and which component is of a construction which resists detachment.

9. Smart card according to Claim 8, wherein the component which resists detachment is constructed in the shape of a swallowtail (6).

10. Smart card according to one of the preceding Claims 6-9, wherein the seat comprises a depressed section (9) of the label provided with an opening (8) which is substantially smaller than the semiconductor substrate, through which opening fixing means extend which at the other end are joined to the semiconductor substrate.

11. Smart card according to one of Claims 6-10, comprising a further label bearing information (10) located on the other side of the plastic support.
